(19) Europäisches Patentamt
European Patent Office
Office européen des brevets

(11) **EP 3 466 723 B1**

(12) **EUROPEAN PATENT SPECIFICATION**

(45) Date of publication and mention
of the grant of the patent:
**07.10.2020 Bulletin 2020/41**

(51) Int Cl.:
***B60C 11/03*** *(2006.01)* ***B60C 9/18*** *(2006.01)*

(21) Application number: **17802938.5**

(86) International application number:
**PCT/JP2017/019797**

(22) Date of filing: **26.05.2017**

(87) International publication number:
**WO 2017/204352 (30.11.2017 Gazette 2017/48)**

(54) **HEAVY LOAD TIRE**

SCHWERLASTREIFEN

PNEUMATIQUE POUR LOURDES CHARGES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.05.2016 JP 2016106223**

(43) Date of publication of application:
**10.04.2019 Bulletin 2019/15**

(73) Proprietor: **Bridgestone Corporation
Tokyo 104-8340 (JP)**

(72) Inventor: **HASEGAWA Tomoo
Tokyo 104-8340 (JP)**

(74) Representative: **Oxley, Robin John George
Marks & Clerk LLP
15 Fetter Lane
London EC4A 1BW (GB)**

(56) References cited:
**EP-A1- 3 321 105    JP-A- H07 117 414
JP-A- S63 222 907    JP-A- 2012 183 885
JP-A- 2013 220 713    JP-A- 2013 220 719**

## Description

### Technical Field

The present invention relates to a heavy load tire provided with a tread portion.

### Related Art

A heavy load tire such as a construction vehicle tire is generally provided with a carcass ply, a belt layer, and a tread portion in order. In addition, the belt layer is usually composed of a plurality of belts, and Patent Literature 1 discloses a heavy load tire having: a protective belt layer composed of two protective belts, that is, a protective crossing belt layer; a main crossing belt layer composed of two main crossing belts; and a small crossing belt layer composed of two small crossing belts.

In such a tire, the main crossing belt layer is arranged on an outer side in a tire radial direction than the small crossing belt layer, and the protective belt layer is arranged on an outer side in the tire radial direction than the main crossing belt layer.

The angle formed by a tire circumferential direction and a cord constituting the small crossing belt layer is, for example, 4 to 10°, the angle formed by the tire circumferential direction and a cord constituting the main crossing belt layer is, for example, 18 to 35°, and the angle formed by the tire circumferential direction and a cord constituting the protective belt layer is, for example, 22 to 33°. Attention is also drawn to the disclosures of JP2013-220719A, JP2012-183885A, JP63-222907A, JP7-117414A, JP2013-220713A and EP3321105A1.

### Citation List

### Patent Literature

Patent Literature 1: WO 2013/157544

### Summary of Invention

### Technical Problem

When arranging a high angle belt having a small angle such as 4 to 10° between a belt cord and the tire circumferential direction, growth of a tire part due to the internal pressure or running, that is, increase in the tire diameter is suppressed.

As a result, increase in the tire diameter due to the internal pressure or running occurs at an outer part in a tire widthwise direction of the high angle belt, especially at a 1/4 point which is a position spaced from the tire equator line by 1/4 of the width in the tire widthwise direction of the tread portion. In addition, circumferential driving force is generated at a tire part where the tire diameter is increased, while braking force is generated on the contrary at a tire part where the tire diameter is hardly increased, and a difference in the degree of deformation between both the tire parts generates shearing force, which is likely to cause uneven wear.

It is to be noted that such a phenomenon is not limited to a case where a high angle belt is arranged in the belt layer but also occurs in a case where a rolling radius is comparatively different in the same tire. For example, the tire diameter and the rolling radius in the vicinity of the tire equator line become larger than those in the vicinity of end portions in the tire widthwise direction. Therefore, when such a tire rotates, force in a tire rotation direction, that is, driving force is generated in a center region, which is a region in the vicinity of the tire equator line, and force in a direction opposite to the tire rotation direction, that is, braking force is generated in a shoulder region, which is a region in the vicinity of the end portions in the tire widthwise direction, and therefore shearing force is generated in the vicinity of the boundary between both the regions, causing uneven wear.

In addition, these are remarkable especially in large construction vehicle tires among heavy load tires.

The present invention has been made in view of the above-described problems, and it is an object of the present invention to provide a heavy load tire capable of improving uneven wear resistance property by suppressing shearing force to be generated between a tread rubber part where driving force is generated and a tread rubber part adjacent to the above-described tread rubber part where braking force is generated.

### Solution to Problem

A heavy load tire according to the present invention is provided as claimed in claim 1.

[DELETED]

### Advantageous Effects of Invention

A heavy load tire according to the aspects of the present invention improves uneven wear resistance property by suppressing shearing force to be generated between a tread rubber part where driving force is generated and a tread rubber part adjacent to the above-described tread rubber part where braking force is generated.

### Brief Description of Drawings

Fig. 1 is a sectional view of a construction vehicle tire according to the first embodiment in a tire widthwise direction along a tire radial direction.
Fig. 2 is an explanatory drawing for explaining the belt structure of the construction vehicle tire according to the first embodiment.
Fig. 3 is a plan view for explaining a tread pattern in the construction vehicle tire according to the first embodiment.

Fig. 4 is a sectional view of a first inner widthwise groove formed at a tread portion of the construction vehicle tire according to the first embodiment.

Fig. 5 is a sectional view of a construction vehicle tire according to the second embodiment in a tire widthwise direction along a tire radial direction.

Fig. 6 is an explanatory drawing for explaining the belt structure of the construction vehicle tire according to the second embodiment.

FIG. 7 is a plan view for explaining a tread pattern in the construction vehicle tire according to the second embodiment.

Fig. 8 is a sectional view of a first inner widthwise groove formed at a tread portion of the construction vehicle tire according to the second embodiment.

Fig. 9 is a plan view for explaining a variation of a tread pattern in the construction vehicle tire according to the second embodiment.

Description of Embodiments

The following description will explain some embodiments of the present invention with reference to the attached drawings using a construction vehicle tire as an example of a heavy load tire. In the following description, the same or similar parts are denoted by the same or similar reference numerals, and detailed description thereof is appropriately omitted. Moreover, the following embodiments are illustrations for embodying the technical idea of the present invention, and embodiments of the present invention can be implemented with various modifications without departing from the gist.

(First Embodiment)

First, the first embodiment will be described.

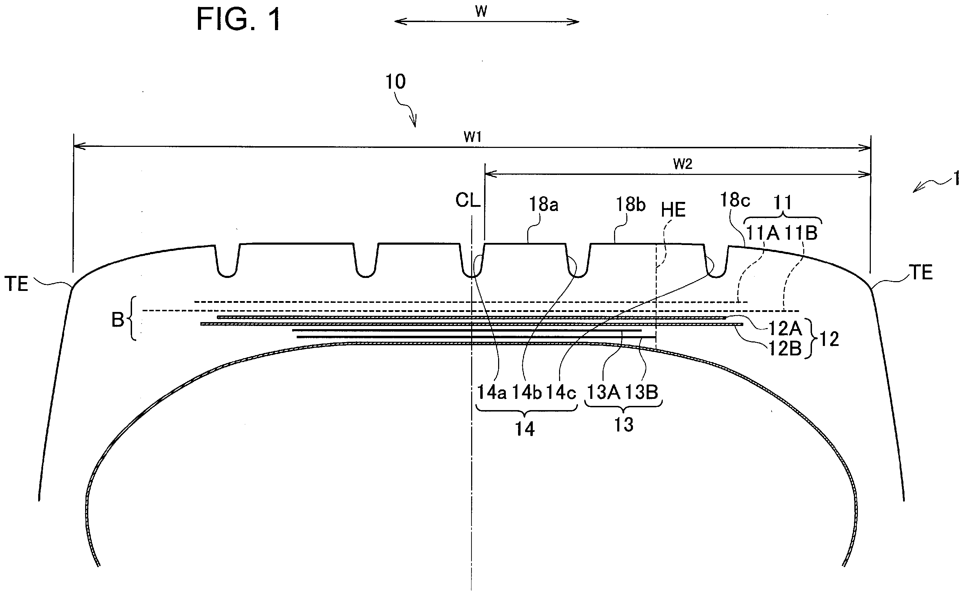

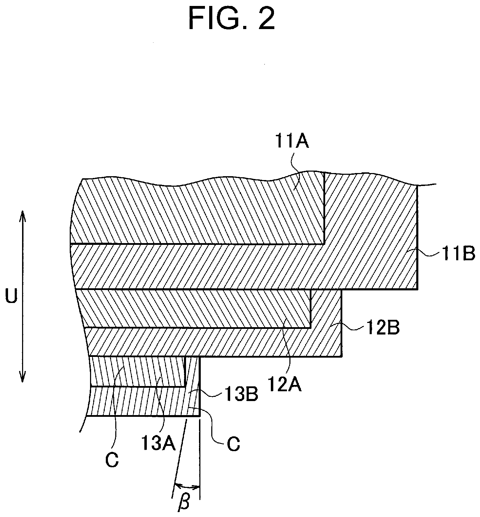

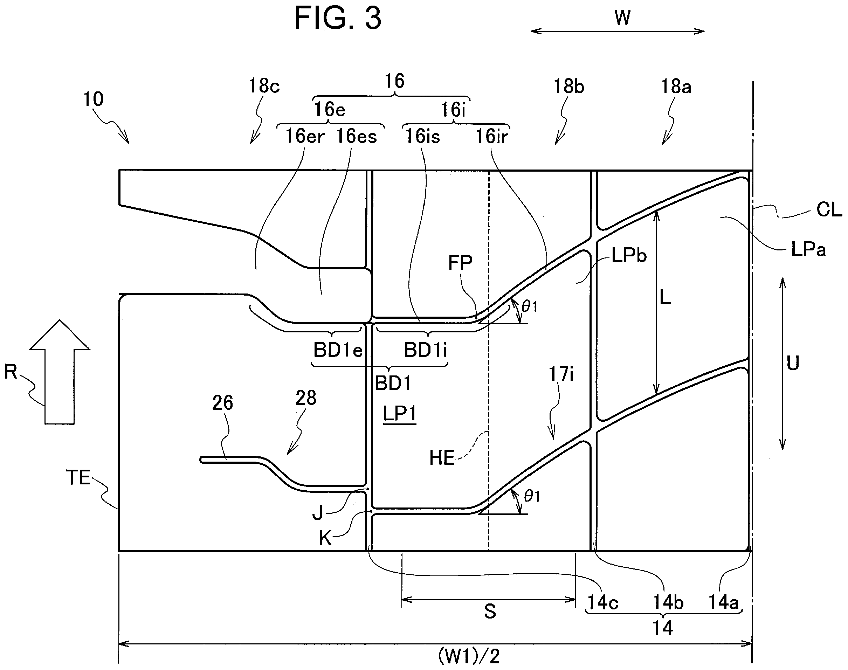

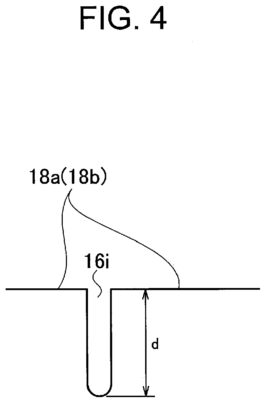

Fig. 1 is a sectional view of a construction vehicle tire of the first embodiment of the present invention in a tire widthwise direction along a tire radial direction. Fig. 2 is an explanatory drawing for explaining the belt structure of the construction vehicle tire of the first embodiment. Fig. 3 is a plan view for explaining a tread pattern in the construction vehicle tire of the first embodiment. In Fig. 3, it is to be noted that separation of the upper side and the lower side of the paper plane is drawn not with break lines but with straight lines for the sake of drawing. Fig. 4 is a sectional view of a first inner widthwise groove formed at a tread portion of the construction vehicle tire of the first embodiment.
As illustrated in Fig. 1, a construction vehicle tire 1 according to the first embodiment is provided with a plurality of belt layers. Specifically, as illustrated in Figs. 1 and 2, the construction vehicle tire 1 according to the first embodiment is provided with a protective belt layer 11 composed of two protective belts 11A/11B, a main crossing belt layer 12 composed of two main crossing belts 12A/12B, and a small crossing belt layer 13 composed of two small crossing belts 13A/13B in a tread portion 10.
In such a construction vehicle tire 1, the main crossing belt layer 12 is arranged on an outer side in the tire radial direction than the small crossing belt layer 13, and the protective belt layer 11 is arranged on an outer side in the tire radial direction than the main crossing belt layer 12 as illustrated in Figs. 1 and 2.
In the first embodiment, the angle β (see Fig. 2) formed by a tire circumferential direction U and a cord C constituting the small crossing belt layer 13 is within the range of 4 to 10°. Accordingly, the small crossing belt layer 13 is constituted of a high angle belt having an angle equal to or smaller than 10° between the tire circumferential direction and a cord constituting the belt layer. The angle formed by a cord constituting the main crossing belt layer 12 and the tire circumferential direction U is within the range of 18 to 35°. The angle formed by a cord constituting the protective belt layer 11 and the tire circumferential direction U is within the range of 22 to 33°.
Moreover, as illustrated in Fig. 3, the construction vehicle tire 1 according to the first embodiment is provided with a plurality of block rows defined by a circumferential groove 14 extending in the tire circumferential direction U or a tread end TE, which is an end portion in a tire widthwise direction W of the tread portion 10, and a widthwise groove 16, which extends in the tire widthwise direction W, in the tread portion 10. Here, the circumferential groove 14 extends along the tire circumferential direction and is composed of a circumferential groove 14a located on a tire equator line CL, a circumferential groove 14b located between a center land portion 18a and a second land portion 18b, and a circumferential groove 14c located between the second land portion 18b and a shoulder land portion 18c.
Moreover, the construction vehicle tire 1 according to the first embodiment is constructed in a manner such that a length W2 of the widthwise groove 16 in the tire widthwise direction W becomes equal to or larger than 30% of a tread width W1 (see the definition of the tread width described later), which is the length of the tread portion 10 in the tire widthwise direction W, as illustrated in Fig. 1.
Moreover, in the tread portion 10 on at least one side of the tire equator line CL, the widthwise groove 16 is composed of: a first inner widthwise groove 16i, which opens to the circumferential groove 14c, extends inward in the tire widthwise direction, traverses the second land portion 18b and the center land portion 18a, reaches the tire equator line CL, and opens to the circumferential groove 14a; and a first outer widthwise groove 16e, which is wider than the first inner widthwise groove 16i, opens to the circumferential groove 14c at a position opposed to the first inner widthwise groove 16i in the tire widthwise direction, extends outward in the tire widthwise direction, traverses the shoulder land portion 18c, and traverses the tread end TE. In addition, such widthwise grooves 16 are arrayed in the tire circumferential direction U.

The first inner widthwise groove 16i has an inner widthwise linear groove 16is extending linearly along the tire widthwise direction W from the circumferential groove 14c toward the inner side in the tire widthwise direction. Furthermore, the first inner widthwise groove 16i has a curved groove 16ir, which is continuous with the inner widthwise linear groove 16is, extends inward in the tire widthwise direction and in a tire normal rotation direction R, and reaches the tire equator line CL. The curved groove 16ir forms an inner groove bent portion BD1i together with the inner widthwise linear groove 16is, so that the inner groove bent portion BD1i having a concave shape with respect to the tire normal rotation direction R is formed of the curved groove 16ir and the inner widthwise linear groove 16is.

In addition, an inclination angle $\theta 1$, which is an angle formed by the curved groove 16ir and the tire widthwise direction, becomes smaller toward the tire equator line CL. As a result, the first inner widthwise groove 16i is inclined with respect to the tire widthwise direction W so that an inner position in the tire widthwise direction of an area from the tire equator line CL to a high angle belt end HE (which is an end of a belt of the small crossing belt layer 13, that is, an end of a high angle belt in the first embodiment) is grounded earlier during rotation in the tire normal rotation direction R.

Moreover, the end portion of the first outer widthwise groove 16e on the side of the circumferential groove 14c also has a linear shape parallel to the tire widthwise direction W and opens to the circumferential groove 14c. The first inner widthwise groove 16i and the first outer widthwise groove 16e open to the circumferential groove 14c so that the groove wall positions on the tire normal rotation direction R side are aligned.

The first outer widthwise groove 16e has an outer widthwise linear groove 16es extending linearly along the tire widthwise direction W from the circumferential groove 14c toward the outer side in the tire widthwise direction. Furthermore, the first outer widthwise groove 16e has a bent groove 16er, which is continuous with the outer widthwise linear groove 16es, extends in the tire widthwise direction W and toward the tire normal rotation direction R side, is bent so that the inclination angle that is an angle against the tire widthwise direction becomes small, extends outward in the tire widthwise direction with a groove width widened, and reaches the tread end TE. The bent groove 16er forms an outer groove bent portion BD1e together with the outer widthwise linear groove 16es so that the outer groove bent portion BD1e having a concave shape with respect to the tire normal rotation direction R is formed of the bent groove 16er and the outer widthwise linear groove 16es.

Here, the groove bent portion BD1 forming the land part LP1 is composed of the inner groove bent portion BD1i and the outer groove bent portion BD1e.

Moreover, in the shoulder land portion 18c, a second outer widthwise groove 26 is formed at a position spaced from the first outer widthwise groove 16e at a predetermined interval in the tire circumferential direction. The groove width of the second outer widthwise groove 26 is smaller than that of the first outer widthwise groove 16e.

The second outer widthwise groove 26 opens to the circumferential groove 14c and extends along the tire widthwise direction W toward the outer side in the tire widthwise direction. In addition, the second outer widthwise groove 26 has a bent portion 28, which is bent in a crank shape outward in the tire widthwise direction and toward the tire normal rotation direction R side, further extends outward along the tire widthwise direction, and terminates in the shoulder land portion 18c. Here, the term "bent in a crank shape" in this specification includes not only being bent steeply but also being curved gently.

Moreover, between first inner widthwise grooves 16i adjacent to each other in the tire circumferential direction U, a second inner widthwise groove 17i, which has the same shape as the first inner widthwise groove 16i, opens to the circumferential groove 14c, and reaches the tire equator line CL, is arranged. In addition, the opening position J of the second outer widthwise groove 26 to the circumferential groove 14c is a position shifted toward the tire normal rotation direction R side from the opening position K of the second inner widthwise groove 17i to the circumferential groove 14c.

Moreover, in a belt layer B arranged on an inner side in the tire radial direction than the tread portion 10, the small crossing belt layer 13 composed of the two small crossing belts 13A/13B as described above is arranged as a high angle belt.

In addition, in tread surface view, that is, in plan view of the tread portion 10, a connection portion FP in the inner groove bent portion BD1i is arranged in a tire widthwise area S within 1/8, or more preferably a tire widthwise area within 1/16, of the tread width W1 from the high angle belt end HE as the widthwise center.

Here, the tread width is the "tread width" defined by JATMA YEAR BOOK. Moreover, the above-described tread end means the outermost position in the tire widthwise direction of the tire tread surface where the tire surface comes into contact with the ground in a state where the tire is assembled to a normal rim and filled to have normal internal pressure, and a normal load is applied. It is to be noted that "normal rim" means a standard rim specified in the following standard according to the size of the tire, "normal internal pressure" means a pneumatic pressure corresponding to the maximum load capacity of a single wheel in an applicable size described in the following standard, and "normal load" means the maximum load of a single wheel in an applicable size of the following standard, that is, the maximum load capacity. In addition, the standard is an industrial standard effective in an area where the tire is produced or used, for example "JATMA YEAR BOOK" from "Japan Automobile Tyre Manufacturers Association" in Japan, "YEAR BOOK" from "THE TIRE AND RIM ASSOCIATION INC." in the United States, or "STANDARD MANUAL" from "The European Tyre and Rim Technical Organisation" in Europe.

In addition, in the first embodiment, the maximum value of the angle θ1 formed by the tire widthwise direction W and the curved groove 16ir is set within the range of 20 to 80°. In the first embodiment, it is to be noted that the maximum value of the angle θ1 is an angle at the inner groove bent portion BD1i.

Moreover, the distance L (see Fig. 3) between the first inner widthwise groove 16i and the second inner widthwise groove 17i adjacent to each other in the tire circumferential direction U, and the groove depth d (see Fig. 4) of the first inner widthwise groove 16i along the tire radial direction satisfy the following relational expression.

$$d/L > 1/10$$

When focusing on wear resistance property, it is to be noted that the width of the circumferential groove 14 in the tire widthwise direction W is preferably equal to or smaller than 10 mm with which the land portions support each other when force is applied.

On the other hand, when focusing on heat dissipation property, the width of the circumferential groove 14 in the tire widthwise direction W is preferably larger than 10 mm.

Moreover, from a viewpoint of heat dissipation property, the groove width of the first inner widthwise groove 16i is preferably equal to or larger than 5 mm even at the narrowest part, and the depth of the first inner widthwise groove 16i is preferably equal to or larger than 1/3 of the distance between the tread surface and the belt layer B.

Furthermore, the construction vehicle tire 1 according to the first embodiment may be constructed in a manner such that the circumferential pitch of the first inner widthwise grooves 16i becomes equal to or larger than 50 mm.

(Function, Effect)

The following description will explain the functions and effects of the first embodiment.

In the construction vehicle tire 1 of the first embodiment, the first inner widthwise groove 16i is provided with the inner widthwise linear groove 16is, which opens to the circumferential groove 14c and extends linearly along the tire widthwise direction W toward the inner side in the tire widthwise direction W.

Furthermore, the first inner widthwise groove 16i is provided with the curved groove 16ir, which is continuous with the inner end in the tire widthwise direction of the inner widthwise linear groove 16is, extends inward in the tire widthwise direction and in the tire normal rotation direction R, and reaches the tire equator line CL. In addition, the angle θ1 formed by the curved groove 16ir and the tire widthwise direction W becomes smaller toward the tire equator line. Here, as the angle θ1 becomes larger, the shearing rigidity of the tire tread surface lowers, and therefore the wear resistance performance deteriorates especially during acceleration or deceleration and during turning. Since the angle θ1 becomes larger at a position closer to the connection portion FP and becomes smaller at a position closer to the equator line, the shearing rigidity of the tire tread surface lowers and the braking force of the groove bent portion BD1 becomes largest in the vicinity of the connection portion FP where the angle θ1 is large. Therefore, shearing stress in the tire widthwise area S within 1/8 of the tread width W1 from the high angle belt end HE where a rolling radius becomes large as the widthwise center is suppressed, and uneven wear that is likely to occur in this area is effectively suppressed. In addition, since the block rigidity is maintained in the vicinity of the equator where the angle θ1 is small, a great effect can be obtained from a viewpoint of maintaining the shearing rigidity of the entire tire. Furthermore, since the curved groove 16ir has a curved shape reaching from the connection portion FP to the equator line CL, uniform wear resistance performance in the tire widthwise direction can be obtained on an outer side in the tire widthwise direction than the connection portion FP in comparison with a case where the widthwise groove 16 on an inner side in the tire widthwise direction than the connection portion FP has a groove shape inclined at a certain angle.

Moreover, in tread surface view, the connection portion FP is arranged in the tire widthwise area S within 1/8 of the tread width W1 from the high angle belt end HE as the widthwise center. Therefore, when the tire is rotated in the tire normal rotation direction R during acceleration or the like, force in the tire normal rotation direction R, that is, driving force is generated at the tread rubber part in the vicinity of the high angle belt end HE where the rolling radius is large during tire normal rotation, while the tire rubber is caused to flow in a direction opposite to the tire normal rotation direction R by incompressibility of the tire rubber, and circumferential braking force is generated at a normal rotation side extending land portion LPa defined by the curved groove 16ir and the circumferential grooves 14a, 14b, or a normal rotation side extending land portion LPb defined by the curved groove 16ir and the circumferential grooves 14b, 14c. As a result, this functions as force to suppress the shearing force to be generated against the tread rubber part in the vicinity of the high angle belt end HE where the rolling radius is large during tire normal rotation, that is, to cancel the shearing force when the forces are equal. Accordingly, uneven wear caused by the shearing force due to the driving force and the braking force is suppressed, and therefore the construction vehicle tire 1 with improved uneven wear resistance property can be obtained.

It is to be noted that Fig. 3 illustrates an example in which the position in the tire widthwise direction of the connection portion FP is arranged on a slightly outer side in the tire widthwise direction than the high angle belt end HE, and a remarkable effect in suppressing uneven wear at the 1/4 point is achieved. Moreover, the rolling radius can be calculated by measuring the tread surface of the rotating tire with a tread surface observing device or the like.

Moreover, by forming the widthwise groove 16 to have a curved shape as in the first embodiment, it becomes easy to incline only a site, which is desired to be inclined, of the widthwise groove 16 with respect to the tire circumferential direction U, and to secure the rigidity in the tire widthwise direction.

Moreover, the curved groove 16ir configuring the first inner widthwise groove 16i is inclined with respect to the tire widthwise direction so that an inner position in the tire widthwise direction of an area from the tire equator line CL to the high angle belt end HE is grounded earlier during rotation in the tire normal rotation direction R. Therefore, the above-described circumferential braking force can be made large further effectively.

Moreover, the maximum value of the angle θ1 formed by the tire widthwise direction W and the curved groove 16ir is within the range of 20 to 80°. Therefore, the above-described circumferential braking force can be made large more effectively.

Moreover, the first embodiment is constructed in a manner such that the length W2 of the widthwise groove 16 in the tire widthwise direction W becomes equal to or larger than 30% of a length W1 of the tread portion 10 in the tire widthwise direction W. Therefore, by effectively making the above-mentioned circumferential braking force large, it becomes possible to significantly improve the uneven wear resistance property.

Although the first embodiment explains a case where the connection portion FP is arranged in a tire widthwise area within 1/8 of the tread width W1 in tread surface view from the high angle belt end HE as the widthwise center as an example in which the connection portion FP is arranged within a predetermined area in the tire widthwise direction, it is to be noted that the uneven wear resistance property at the tread rubber part can be improved according to a similar principle even when the connection portion FP is arranged in a tire widthwise area within 1/8, or more preferably 1/16, of the tread width W1 not from the high angle belt end HE but from a position in the tire widthwise direction where the rolling radius is large during tire normal rotation as the widthwise center. Furthermore, a similar effect can be achieved even in a construction vehicle tire that does not have a high angle belt.

[DELETED]

[DELETED]

[DELETED]

[DELETED]

(Second Embodiment)

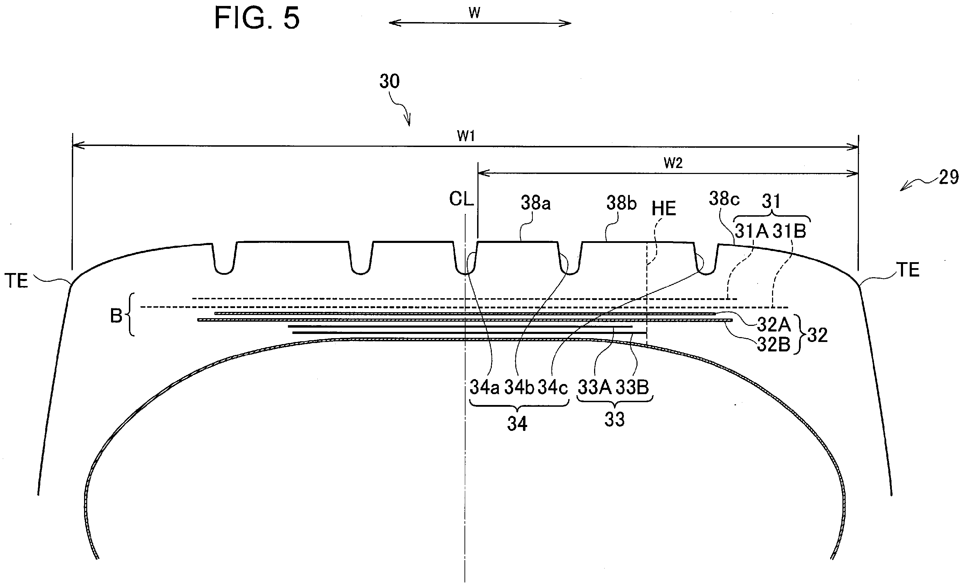

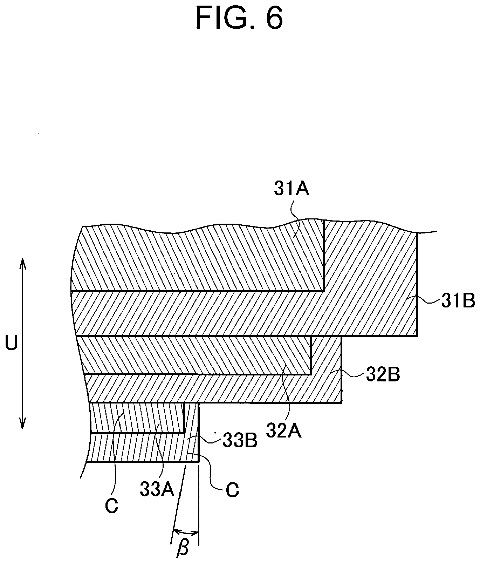

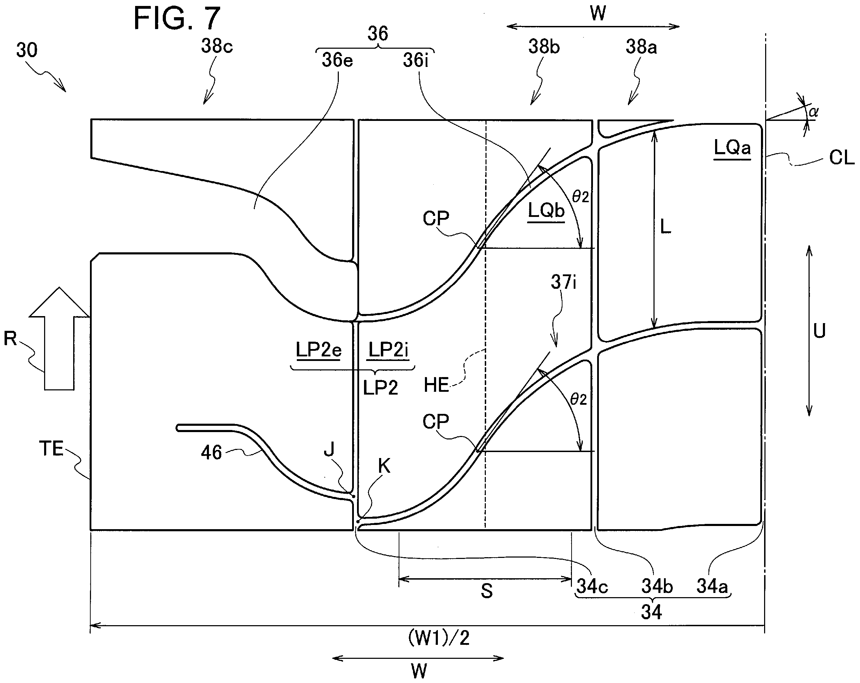

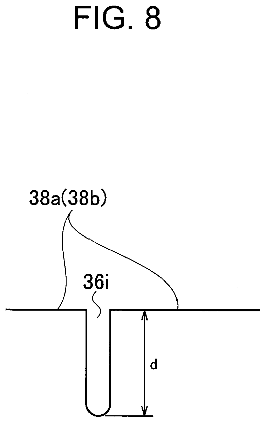

Fig. 5 is a sectional view of a construction vehicle tire according to the second embodiment, which is not according to the present invention but which is useful for understanding the present invention, in the tire widthwise direction along a tire radial direction. Fig. 6 is an explanatory drawing for explaining the belt structure of the construction vehicle tire according to the second embodiment. Fig. 7 is a plan view for explaining a tread pattern in the construction vehicle tire according to the second embodiment. In Fig. 7, it is to be noted that separation of the upper side and the lower side of the paper plane is drawn not with break lines but with straight lines for the sake of drawing. Fig. 8 is a sectional view of a first inner widthwise groove formed at a tread portion of the construction vehicle tire according to the second embodiment.

As illustrated in Fig. 5, a construction vehicle tire 29 according to the second embodiment is provided with a plurality of belt layers. Specifically, as illustrated in Figs. 5 and 6, the construction vehicle tire 29 according to the second embodiment is provided with a protective belt layer 31 composed of two protective belts 31A/31B, a main crossing belt layer 32 composed of two main crossing belts 32A/32B, and a small crossing belt layer 33 composed of two small crossing belts 33A/33B in a tread portion 30.

In such a construction vehicle tire 29, the main crossing belt layer 32 is arranged on an outer side in the tire radial direction than the small crossing belt layer 33, and the protective belt layer 31 is arranged on an outer side in the tire radial direction than the main crossing belt layer 32 as illustrated in Figs. 5 and 6.

In the second embodiment, the angle β (see Fig. 6) formed by a tire circumferential direction U and a cord C constituting the small crossing belt layer 33 is within the range of 4 to 10°, and therefore the small crossing belt layer 33 is constituted of a high angle belt having an angle equal to or smaller than 10° between the tire circumferential direction and a cord constituting the belt layer. The angle formed by a cord constituting the main crossing belt layer 32 and the tire circumferential direction U is within the range of 18 to 35°. The angle formed by a cord constituting the protective belt layer 31 and the tire circumferential direction U is within the range of 22 to 33°.

Moreover, as illustrated in Fig. 7, the construction vehicle tire 29 according to the second embodiment is provided with a plurality of block rows defined by a circumferential groove 34 extending in the tire circumferential direction U or a tread end TE, which is an end portion in a tire widthwise direction W of the tread portion 30, and a widthwise groove 36, which extends in the tire widthwise direction W, in the tread portion 30. Here, the circumferential groove 34 extends along the tire circumferential direction U and is composed of a circumferential groove 34a located on a tire equator line CL, a circumferential groove 34b located between a center land portion 38a and a second land portion 38b, and a circumferential groove 34c located between the second land portion 38b and a shoulder land portion 38c.

Moreover, in the second embodiment, the widthwise groove 36 is composed of: a first inner widthwise groove 36i, which opens to the circumferential groove 34a, extends outward in the tire widthwise direction, traverses the center land portion 38a and the circumferential groove 34b, traverses the second land portion 38b, and opens to the circumferential groove 34c; and a first outer widthwise groove 36e, which opens to the circumferential groove 34c, traverses the shoulder land portion 38c, and traverses the tread end TE. The groove width of the first outer widthwise groove 36e is larger than that of the first inner widthwise groove 36i.

Moreover, the first inner widthwise groove 36i and the first outer widthwise groove 36e both extend in a curved shape and do not have any corner portion.

Moreover, the construction vehicle tire 29 according to the second embodiment is constructed in a manner such that a length W2 of the widthwise groove 36 in the tire widthwise direction W becomes equal to or larger than 30% of a tread width W1, which is the length of the tread portion 30 in the tire widthwise direction W, as illustrated in Fig. 5.

Moreover, the first inner widthwise groove 36i has an inflection point CP where the direction of a convex or a concave with respect to the tire circumferential direction changes on at least one side of the tire equator line CL.

An inner side of the first inner widthwise groove 36i in the tire widthwise direction than the inflection point CP extends with the angle $\theta2$ against the tire widthwise direction W becoming smaller toward the tire equator line and reaches the tire equator line.

An outer side of the first inner widthwise groove 36i in the tire widthwise direction than the inflection point CP extends toward a side opposite to a tire normal rotation direction R side, that is, toward the tire reversal rotation side and outward in the tire widthwise direction with the angle $\theta2$ against the tire widthwise direction W gradually decreased to 0°, and further extends toward the tire normal rotation direction R side and outward in the tire widthwise direction with the angle against the tire widthwise direction W, which is an acute angle, gradually increased, so that a curved convex shape toward a side opposite to the tire normal rotation direction R, that is, a curved concave shape with respect to the tire normal rotation direction R is obtained. As a result, a curved concave land part LP2 having a curved concave shape with respect to the tire normal rotation direction R is formed.

In the second embodiment, a tire widthwise inner half portion LP2i of the curved concave land part LP2 is defined by the first inner widthwise groove 36i, and a tire widthwise outer half portion LP2e of the curved concave land part LP2 is defined by the first outer widthwise groove 36e.

Moreover, an end portion of the first inner widthwise groove 36i on the side of the circumferential groove 34c opens to the circumferential groove 34c so as to face parallel to the tire widthwise direction W, and an end portion of the first outer widthwise groove 36e on the side of the circumferential groove 34c also opens to the circumferential groove 34c so as to face parallel to the tire widthwise direction W. In addition, the first inner widthwise groove 36i and the first outer widthwise groove 36e open to the circumferential groove 34c so that the groove wall positions on the tire normal rotation direction R side are aligned.

Moreover, in the shoulder land portion 38c, a second outer widthwise groove 46 is formed at a position spaced from the first outer widthwise groove 36e at a predetermined interval in the tire circumferential direction. The groove width of the second outer widthwise groove 46 is smaller than that of the first outer widthwise groove 36e.

The second outer widthwise groove 46 opens to the circumferential groove 34c, extends toward the tire normal rotation direction R side and outward in the tire widthwise direction so as to have a curved convex shape toward a side opposite to the tire reversal rotation direction, that is, a curved concave shape with respect to the tire normal rotation direction R, is further bent outward in the tire widthwise direction, extends linearly along the tire widthwise direction, and terminates in the shoulder land portion 38c.

Moreover, between first inner widthwise grooves 36i adjacent to each other in the tire circumferential direction U, a second inner widthwise groove 37i, which has the same shape as the first inner widthwise groove 36i, opens to the circumferential groove 34c, and reaches the tire equator line CL, is arranged. In addition, the opening position J of the above-described second outer widthwise groove 46 to the circumferential groove 34c is a position shifted toward the tire normal rotation direction R side from the opening position K of the second inner widthwise groove 37i to the circumferential groove 34c.

Moreover, in a belt layer B arranged on an inner side in the tire radial direction than the tread portion 30, the small crossing belt layer 33 composed of the two small crossing belts 33A/33B as described above is arranged as a high angle belt.

In addition, in tread surface view, that is, in plan view of the tread portion 30, an inflection point CP is arranged in a tire widthwise area S within 1/8, or more preferably a tire widthwise area within 1/16, of the tread width W1 from a high angle belt end HE as the widthwise center.

In addition, in the second embodiment, the maximum value of the angle $\theta2$ formed by the tire widthwise direction W and the first inner widthwise groove 36i is set within the range of 20 to 80°. It is to be noted that Fig. 7 illustrates a state where the angle $\theta2$ becomes largest at the inflection point CP.

Furthermore, in the second embodiment, the angle α formed by the first inner widthwise groove 36i and the tire widthwise direction W is within the range of 0 to 20° at the intersection position of the tire equator line CL and the first inner widthwise groove 36i. It is to be noted that Fig. 7 illustrates the first inner widthwise groove 36i in a manner such that α becomes approximately 0°.

Moreover, the distance L (see Fig. 7) between the first inner widthwise groove 36i and the second inner widthwise groove 37i adjacent to each other in the tire circumferential direction U, and the groove depth d (see Fig. 8) of the first inner widthwise groove 36i along the tire radial direction satisfy the following relational expression as in the first embodiment.

$$d/L > 1/10$$

When focusing on wear resistance property, it is to be noted that the width of the circumferential groove 34 in the tire widthwise direction W is preferably equal to or smaller than 10 mm with which the land portions support each other when force is applied.

On the other hand, when focusing on heat dissipation property, the width of the circumferential groove 34 in the tire widthwise direction W is preferably larger than 10 mm.

Furthermore, the construction vehicle tire 29 according to the second embodiment may be constructed in a manner such that the circumferential pitch of the first inner widthwise grooves 36i becomes equal to or larger than 50 mm.

(Function, Effect)

The following description will explain the functions and effects of the second embodiment.

In the construction vehicle tire 29 of the second embodiment, the widthwise groove 36 composed of the first inner widthwise groove 36i and the first outer widthwise groove 36e opens to the circumferential groove 34a and has an inflection point CP where the direction of a convex or concave with respect to the tire circumferential direction U changes toward the outer side in the tire widthwise direction.

In addition, an inner side of the widthwise groove 36 in the tire widthwise direction than the inflection point CP extends with the angle θ2 against the tire widthwise direction W becoming smaller toward the tire equator line and reaches the tire equator line. Here, as the angle θ2 becomes larger, the shearing rigidity of the tire tread surface lowers, and therefore the wear resistance performance deteriorates especially during acceleration or deceleration and during turning. Since the angle θ2 becomes larger at a position closer to the inflection point CP and becomes smaller at a position closer to the equator line, the shearing rigidity of the tire tread surface lowers and therefore the braking force of the curved concave land part LP2 becomes largest in the vicinity of the inflection point CP where the angle θ2 is large. Therefore, shearing stress in the tire widthwise area S within 1/8 of the tread width W1 from the high angle belt end HE where a rolling radius becomes large as the widthwise center is suppressed, and uneven wear that is likely to occur in this area is effectively suppressed. In addition, since the block rigidity is maintained in the vicinity of the equator where the angle θ2 is small, a great effect can be obtained from a viewpoint of maintaining the shearing rigidity of the entire tire. Furthermore, since the widthwise groove 36 has a curved shape reaching from the inflection point CP to the equator line CL, uniform wear resistance performance in the tire widthwise direction can be obtained on an outer side in the tire widthwise direction than the inflection point CP in comparison with a case where the widthwise groove 36 on an inner side in the tire widthwise direction than the inflection point CP has a groove shape inclined at a certain angle.

In addition, an outer side of the widthwise groove 36 in the tire widthwise direction than the inflection point CP extends from the inflection point CP toward the tire reversal rotation direction side, that is, a side opposite to the tire normal rotation direction R side and outward in the tire widthwise direction and further extends toward the tire normal rotation direction R side and outward in the tire widthwise direction, so that a curved concave land part LP2 having a curved concave shape with respect to the tire normal rotation direction R is formed. In addition, in tread surface view, the inflection point CP is arranged in a tire widthwise area within 1/8 of the tread width W1 from the high angle belt end HE as the widthwise center.

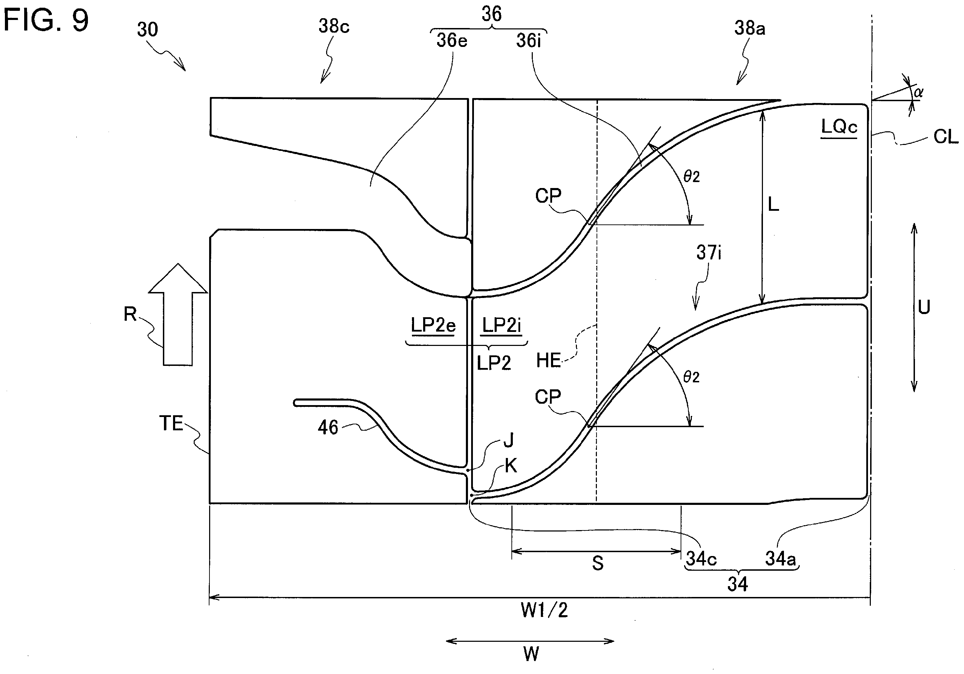

Therefore, when the tire is rotated in the tire normal rotation direction R during acceleration or the like, force in the tire normal rotation direction R, that is, driving force is generated at the tread rubber part in the vicinity of the high angle belt end HE where the rolling radius is large during tire normal rotation, while the tire rubber is caused to flow in a direction opposite to the tire normal rotational direction R by incompressibility of the tire rubber, and circumferential braking force is generated at a normal rotation side extending land portion LQa defined by the first inner widthwise groove 36i and the circumferential grooves 34a, 34b, or a normal rotation side extending land portion LQb defined by the first inner widthwise groove 36i and the circumferential grooves 34b, 34c. As a result, this functions as force to suppress the shearing force to be generated against the tread rubber part in the vicinity of the high angle belt end HE where the rolling radius is large during tire normal rotation, that is, to cancel the shearing force when the forces are equal. Accordingly, uneven wear caused by the shearing force due to the driving force and the braking force is suppressed, and therefore the construction vehicle tire 29 with improved uneven wear resistance property can be obtained. As illustrated in Fig. 9, it is to be noted that it is also possible to adopt a structure in which the circumferential groove 34b is not formed. With such a structure, it is possible to obtain a further remarkable effect in the forward rotation side extending land portion LQc defined by the first inner widthwise groove 36i and the circumferential grooves 34a, 34c.

It is to be noted that Fig. 7 illustrates an example in which the position in the tire widthwise direction of the inflection point CP is arranged on a slightly outer side in the tire widthwise direction than the high angle belt end HE, and a remarkable effect in suppressing uneven wear at the 1/4 point is achieved.

Moreover, by forming the widthwise groove 36 to have a curved shape as in the second embodiment, it becomes possible to incline only a site, which is desired to be inclined, of the widthwise groove 36 with respect to the tire circumferential direction U, and it becomes easy to ensure the rigidity in the tire widthwise direction. Moreover, since the inclination of the widthwise groove 36 can be made large in comparison with a case where the widthwise groove 36 has a corner portion, the above-described circumferential breaking force can be made large effectively.

Moreover, the first inner widthwise groove 36i is inclined with respect to the tire widthwise direction so that an inner position in the tire widthwise direction of an area from the tire equator line CL to the high angle belt end HE is grounded earlier during rotation in the tire normal rotation direction R. Therefore, the above-described circumferential braking force can be made large further effectively.

Moreover, the maximum value of the angle θ2 formed by the tire widthwise direction W and the first inner widthwise groove 36i is within the range of 20 to 80°. Therefore, the above-described circumferential braking force can be made large more effectively.

Moreover, the second embodiment is constructed in a manner such that the length W2 of the widthwise groove 36 in the tire widthwise direction W becomes equal to or larger than 30% of a length W1 of the tread portion 30 in the tire widthwise direction W. Therefore, by effectively making the above-mentioned circumferential braking force large, it becomes possible to significantly improve the uneven wear resistance property.

Moreover, the angle α formed by the first inner widthwise groove 36i and the tire widthwise direction W is within the range of 0 to 20° at an intersection position of the tire equator line CL and the first inner widthwise groove 36i. This effectively prevents the block rigidity from being impaired.

Although the second embodiment explains a case where the inflection point CP is arranged in a tire widthwise area within 1/8 of the tread width W1 in tread surface view from the high angle belt end HE as the widthwise center as an example in which the inflection point CP is arranged within a predetermined area in the tire widthwise direction, it is to be noted that the uneven wear resistance property at the tread rubber part can be improved according to a similar principle even when the inflection point CP is arranged in a tire widthwise area within 1/8, or more preferably 1/16, of the tread width W1 not from the high angle belt end HE but from a position in the tire widthwise direction where the rolling radius is large during tire normal rotation as the widthwise center. Furthermore, even a construction vehicle tire not having a high angle belt can achieve a similar effect, and a similar effect can also be achieved with not a construction vehicle tire but a heavy load tire.

[DELETED]
[DELETED]
[DELETED]
[DELETED]
[DELETED]

Industrial Applicability

The heavy load tire according to the embodiments of the present invention improves uneven wear resistance property by suppressing shearing force to be generated between a tread rubber part where driving force is generated and a tread rubber part adjacent to the above-described tread rubber part where braking force is generated.

Reference Signs List

| 1 | CONSTRUCTION VEHICLE TIRE |
|---|---|
| 10 | TREAD PORTION |
| 13 | SMALL CROSSING BELT LAYER (HIGH ANGLE BELT) |
| 14 | CIRCUMFERENTIAL GROOVE |
| 14a | CIRCUMFERENTIAL GROOVE |
| 14b | CIRCUMFERENTIAL GROOVE |
| 14c | CIRCUMFERENTIAL GROOVE |
| 16 | WIDTHWISE GROOVE |
| 16e | FIRST OUTER WIDTHWISE GROOVE |
| 16i | FIRST INNER WIDTHWISE GROOVE |
| 16is | INNER WIDTHWISE LINEAR GROOVE |
| 16ir | CURVED GROOVE |
| 17i | SECOND INNER WIDTHWISE GROOVE |
| 26 | SECOND OUTER WIDTHWISE GROOVE |
| 29 | CONSTRUCTION VEHICLE TIRE |
| 30 | TREAD PORTION |
| 33 | SMALL CROSSING BELT LAYER (HIGH ANGLE BELT) |
| 34 | CIRCUMFERENTIAL GROOVE |
| 34a | CIRCUMFERENTIAL GROOVE |
| 34b | CIRCUMFERENTIAL GROOVE |
| 34c | CIRCUMFERENTIAL GROOVE |
| 36 | WIDTHWISE GROOVE |
| 37i | SECOND INNER WIDTHWISE GROOVE |
| 46 | SECOND OUTER WIDTHWISE GROOVE |
| B BELT | LAYER |

BD1    GROOVE BENT PORTION
CL     TIRE EQUATOR LINE
CP     INFLECTION POINT
FP     CONNECTION PORTION
HE     HIGH ANGLE BELT END
LP1    LAND PART
LP2    CURVED CONCAVE LAND PART
TE     TREAD END
R      TIRE NORMAL ROTATION DIRECTION
U      TIRE CIRCUMFERENTIAL DIRECTION
W      TIRE WIDTHWISE DIRECTION
W1     TREAD WIDTH
θ1     ANGLE
θ2     ANGLE
α      ANGLE

**Claims**

1.  A heavy load tire (1) comprising a tread portion (10), wherein
    the tread portion (10) is partitioned into a plurality of portions by a widthwise groove (16) extending in a tire widthwise direction (W), and at least one of a circumferential groove (14) extending in a tire circumferential direction (U) and a tread end (TE) that is an end portion of the tread portion (10),
    the circumferential groove (14) and a first inner widthwise groove (16i), which is arrayed in a tire circumferential direction (U) and included in the widthwise groove (16), are formed on at least one side of a tire equator line (CL),
    the first inner widthwise groove (16i) opens to the circumferential groove (14), extends inward in the tire widthwise direction (W), and reaches the tire equator line (CL),
    the first inner widthwise groove (16i) includes:

    an inner widthwise linear groove (16is) extending linearly along a tire widthwise direction (W) from the circumferential groove (14) toward an inner side in the tire widthwise direction (W); and
    a curved groove (16ir), which is continuous with an inner end in the tire widthwise direction (W) of the inner widthwise linear groove (16is), extends inward in the tire widthwise direction (W) and in a tire normal rotation direction, and reaches the tire equator line (CL), and
    an angle (θ1) formed by the curved groove (16ir) and the tire widthwise direction (W) becomes smaller toward the tire equator line (CL),
    wherein a first outer widthwise groove (16e), which is included in the widthwise groove (16), is wider than the first inner widthwise groove (16i), opens to the circumferential groove (14) at a position opposed to the first inner widthwise groove (16i), and extends outward in the tire widthwise direction (W), is arrayed in the tire circumferential direction (U), and
    wherein a second outer widthwise groove (26), which is narrower than the first outer widthwise groove (16e), opens to the circumferential groove (14), and extends outward in the tire widthwise direction (W), is arranged between the first outer widthwise grooves (16e) adjacent to each other in the tire circumferential direction (U).

2.  The heavy load tire (1) according to claim 1, wherein a connection portion (FP) of the inner widthwise linear groove (16is) and the curved groove (16ir) is arranged within a predetermined area in the tire widthwise direction (W).

3.  The heavy load tire (1) according to claim 2, wherein a high angle belt (13) is arranged in a belt layer arranged on an inner side in the tire radial direction than the tread portion (10), and
    the connection portion (FP) is arranged in a tire widthwise area within 1/8 of a tread width (W1) from a high angle belt end (HE) as a widthwise center in tread surface view.

4.  The heavy load tire (1) according to any preceding claim, wherein
    a second inner widthwise groove (17i), which has a same shape as the first inner widthwise groove (16i), opens to the circumferential groove (14), and reaches the tire equator line (CL), is arranged between first inner widthwise grooves (16i) adjacent to each other in the tire circumferential direction (U), and
    an opening position (J) of the second outer widthwise groove (26) to the circumferential groove (14) is set to a position shifted in the tire circumferential direction (U) from an opening position (K) of the second inner widthwise groove (17i) to the circumferential groove (14).

5.  The heavy load tire (1) according to claim 4, wherein the first outer widthwise groove (16e) includes an outer widthwise linear groove (16es) extending linearly along the tire widthwise direction (W) from the circumferential groove (14c) toward the outer side in the tire widthwise direction (W) and a bent groove (16er), which is continuous with the outer widthwise linear groove (16es), extends in the tire widthwise direction (W) and toward the tire normal rotation direction (R) side, is bent so that the inclination angle that is an angle against the tire widthwise direction becomes small, extends outward in the tire widthwise direction with a groove width widened, and reaches the tread end (TE).

6.  The heavy load tire (1) according to any one of claims 1 to 5, wherein a maximum value of an angle formed by the widthwise groove (16) and the tire widthwise direction is within a range of 20 to 80°.

## Patentansprüche

1. Schwerlastreifen (1), welcher einen Laufflächenabschnitt (10) umfasst, wobei:

der Laufflächenabschnitt (10) in eine Vielzahl von Abschnitten partitioniert ist, durch eine Breitenrichtungsrille (16), welche sich in eine Reifenbreitenrichtung (W) erstreckt, und durch mindestens eine einer Umfangsrichtungsrille (14), welche sich in eine Reifenumfangsrichtung (U) erstreckt und ein Laufflächenende (TE), welches ein Endabschnitt des Laufflächenabschnittes (10) ist,

wobei die Umfangsrichtungsrille (14) und eine erste innere Breitenrichtungsrille (16i), welche in einer Reifenumfangsrichtung (U) angeordnet und in der Breitenrichtungsrille (16) eingeschlossen ist, an mindestens einer Seite einer Reifenäquatorlinie (CL) gebildet sind,

wobei die innere Breitenrichtungsrille (16i) sich in die Umfangsrichtungsrille (14) öffnet, sich einwärts in die Reifenbreitenrichtung (W) erstreckt und die Reifenäquatorlinie (CL) erreicht,

wobei die innere Breitenrichtungsrille (16i) Folgendes umfasst:

eine innere lineare Breitenrichtungsrille (16is), welche sich linear entlang einer Reifenbreitenrichtung (W) von der Umfangsrichtungsrille (14) in Richtung einer inneren Seite in der Reifenbreitenrichtung (W) erstreckt; und

eine gekrümmte Rille (16ir), welche kontinuierlich mit einem inneren Ende in der Reifenbreitenrichtung (W) der linearen inneren Breitenrichtungsrille (16is) ist, sich einwärts in die Reifenbreitenrichtung (W) und in eine Reifendrehungs-Normalrichtung erstreckt, und die Reifenäquatorlinie (CL) erreicht, und

ein Winkel (θ1), gebildet durch die gekrümmte Rille (16ir) und der Reifenbreitenrichtung (W) in Richtung der Reifenäquatorlinie (CL) kleiner wird,

wobei eine erste äußere Breitenrichtungsrille (16e), welche in der Breitenrichtungsrille (16) eingeschlossen ist, breiter als die erste innere Breitenrichtungsrille (16i) ist, sich in die Umfangsrichtungsrille (14) an einer Position öffnet, welche der ersten inneren Breitenrichtungsrille (16i) abgewandt ist, und sich auswärts in die Reifenbreitenrichtung (W) erstreckt, in der Reifenumfangsrichtung (U) angeordnet ist, und

wobei eine zweite äußere Breitenrichtungsrille (26), welche schmaler als die erste äußere Breitenrichtungsrille (16e) ist, sich in die Umfangsrichtungsrille (14) öffnet, und sich auswärts in die Reifenbreitenrichtung (W) erstreckt, zwischen den ersten äußeren Breitenrichtungsrillen (16e) angeordnet ist, welche einander in der Reifenumfangsrichtung (U) benachbart sind.

2. Schwerlastreifen (1) nach Anspruch 1, wobei ein Verbindungsabschnitt (FP) der inneren linearen Breitenrichtungsrille (16is) und der gekrümmten Rille (16ir) innerhalb einer vorbestimmten Fläche in der Reifenbreitenrichtung (W) angeordnet ist.

3. Schwerlastreifen (1) nach Anspruch 2, wobei ein Gürtel mit hohem Winkel (13) in einer Gürtelschicht angeordnet ist, welche an einer inneren Seite in der Reifenradialrichtung als der Laufflächenabschnitt (10) angeordnet ist, und der Verbindungsabschnitt (FP) in einem Bereich in Reifenbreitenrichtung innerhalb 1/8 einer Laufflächenbreite (W1) von einem Ende des Gürtels mit hohem Winkel (HE) als einem Breitenrichtungs-Mittelpunkt in einer Laufflächen-Oberflächenansicht angeordnet ist.

4. Schwerlastreifen (1) nach einem der vorhergehenden Ansprüche, wobei eine zweite innere Breitenrichtungsrille (17i), welche dieselbe Form wie die erste innere Breitenrichtungsrille (16i) aufweist, sich in die Umfangsrichtungsrille (14) öffnet und die Reifenäquatorlinie (Cl) erreicht, zwischen den ersten inneren Breitenrichtungsrillen (16i) angeordnet ist, welche einander in der Reifenumfangsrichtung (U) benachbart sind, und eine Öffnungsposition (J) der zweiten äußeren Breitenrichtungsrille (26) zur Umfangsrichtungsrille (14) in eine Position gesetzt ist, welche in der Reifenumfangsrichtung (U) von einer Öffnungsposition (K) der zweiten inneren Breitenrichtungsrille (17i) zur Umfangsrichtungsrille (14) verschoben ist.

5. Schwerlastreifen (1) nach Anspruch 4, wobei die erste äußere Breitenrichtungsrille (16e) eine äußere lineare Breitenrichtungsrille (16es) einschließt, welche sich linear entlang der Reifenbreitenrichtung (W) von der Umfangsrichtungsrille (14c) in Richtung der äußeren Seite in der Reifenbreitenrichtung (W) erstreckt und eine gebogene Rille (16er), welche kontinuierlich mit der äußeren linearen Breitenrichtungsrille (16es) ist, sich in die Reifenbreitenrichtung (W) und in Richtung der Seite der Normal-Reifendrehungsrichtung (R) erstreckt, derart gebogen ist, dass der Neigungswinkel, welcher der Winkel zur Reifenbreitenrichtung ist, klein wird, sich auswärts in die Reifenbreitenrichtung mit einer erweiterten Rillenbreite erstreckt, und das Laufflächenende (TE) erreicht.

6. Schwerlastreifen (1) nach einem der Ansprüche 1 bis 5, bei welchem ein maximaler Wert eines Winkels, gebildet aus der Breitenrichtungsrille (16) und der Reifenbreitenrichtung, in einem Bereich von 20° bis 80° liegt.

**Revendications**

1. Bandage pneumatique pour poids-lourds (1), comprenant une partie de bande de roulement (10), dans lequel :

la partie de bande de roulement (10) est divisée en une pluralité de parties par une rainure dans le sens de la largeur (16) s'étendant dans une direction de la largeur du bandage pneumatique (W), et par au moins un élément, une rainure circonférentielle (14) s'étendant dans une direction circonférentielle du bandage pneumatique (U) et une extrémité de la bande de roulement (TE) constituant une partie d'extrémité de la bande de roulement (10) ;

la rainure circonférentielle (14) et une première rainure interne dans le sens de la largeur (16i), agencée dans une direction circonférentielle du bandage pneumatique (U) et incluse dans la rainure dans le sens de la largeur (16), sont formées sur au moins un côté de la ligne équatoriale du bandage pneumatique (CL) ;

la première rainure interne dans le sens de la largeur (16i) est ouverte vers la rainure circonférentielle (14), s'étend vers l'intérieur dans la direction de la largeur du bandage pneumatique (W) et atteint la ligne équatoriale du bandage pneumatique (CL) ;

la première rainure interne dans le sens de la largeur (16i) comprend :

une rainure linéaire interne dans le sens de la largeur (16is) s'étendant de manière linéaire le long d'une direction de la largeur du bandage pneumatique (W) de la rainure circonférentielle (14) vers un côté interne dans la direction de la largeur du bandage pneumatique (W) ; et

une rainure courbée (16ir) est continue avec une extrémité interne, dans la direction de la largeur du bandage pneumatique (W), de la rainure linéaire interne dans le sens de la largeur (16is) s'étend vers l'intérieur dans la direction de la largeur du bandage pneumatique (W) et dans une direction de rotation normale du bandage pneumatique, et atteint la ligne équatoriale du bandage pneumatique (CL) ; et

un angle (θ1) formé par la rainure courbée (16ir) et la direction de la largeur du bandage pneumatique (W) rétrécit vers la ligne équatoriale du bandage pneumatique (CL) ;

dans lequel une première rainure externe dans le sens de la largeur (16e), incluse dans la rainure dans le sens de la largeur (16), plus large que la première rainure interne dans le sens de la largeur (16i), ouverte vers la rainure circonférentielle (14) au niveau d'une position opposée à la première rainure interne dans le sens de la largeur (16i) et s'étendant vers l'extérieur dans la direction de la largeur du bandage pneumatique (W), est agencée dans la direction circonférentielle du bandage pneumatique (U) ; et

dans lequel une deuxième rainure externe dans le sens de la largeur (26), plus étroite que la première rainure externe dans le sens de la largeur (16e), ouverte vers la rainure circonférentielle (14) et s'étendant vers l'extérieur dans la direction de la largeur du bandage pneumatique (W), est agencée entre les premières rainures externes dans le sens de la largeur (16e) adjacentes les unes aux autres dans la direction circonférentielle du bandage pneumatique (U).

2. Bandage pneumatique pour poids-lourds (1) selon la revendication 1, dans lequel une partie de raccordement (FP) de la rainure linéaire interne dans le sens de la largeur (16is) et de la rainure courbée (16ir) est agencée à l'intérieur d'une zone prédéterminée dans la direction de la largeur du bandage pneumatique (W).

3. Bandage pneumatique pour poids-lourds (1) selon la revendication 2, dans lequel :

une ceinture à angle élevé (13) est agencée dans une couche de ceinture agencée sur un côté interne, dans la direction radiale du bandage pneumatique que la partie de bande de roulement (10) ; et

la partie de raccordement (FP) est agencée dans une zone dans le sens de la largeur du bandage pneumatique, dans le cadre de 1/8 d'une largeur de la bande de roulement (W1), à partir d'une extrémité de la ceinture à angle élevé ((HE), en tant que centre dans le sens de la largeur dans la vue de la surface de la bande de roulement.

4. Bandage pneumatique pour poids-lourds (1) selon l'une quelconque des revendications précédentes, dans lequel :

une deuxième rainure interne dans le sens de la largeur (17i), ayant la même forme que la première rainure interne dans le sens de la largeur (16i), ouverte vers la rainure circonférentielle (14) et atteignant la ligne équatoriale du bandage pneumatique (CL), est agencée entre les premières rainures internes dans le sens de la largeur (16i) adjacentes les unes aux autres dans la direction circonférentielle du bandage pneumatique (U) ; et

une position d'ouverture (J) de la deuxième rainure externe dans le sens de la largeur (26) vers la rainure circonférentielle (14) est ajustée dans une position décalée dans la direction circonférentielle du bandage pneumatique (U) d'une position d'ouverture (K) de la deuxième rainure interne dans le sens de la largeur (17i) vers la rainure circonférentielle (14)

5. Bandage pneumatique pour poids-lourds (1) selon la revendication 4, dans lequel :
la première rainure externe dans le sens de la largeur (16e) inclut une rainure linéaire externe dans le sens de la largeur (16es) s'étendant de manière linéaire le long de la direction de la largeur du bandage pneumatique (W), de la rainure circonférentielle (14c) vers le côté externe dans la direction de la largeur du bandage pneumatique (W), et une rainure fléchie (16er) qui est continue avec à la rainure linéaire externe dans le sens de la largeur (16es), s'étendant dans la direction de la largeur du bandage pneumatique (W) et vers le côté de la direction de rotation normale du bandage pneumatique (R), est fléchie de sorte que l'angle d'inclinaison , constituant un angle par rapport à la direction de la largeur du bandage pneumatique, rétrécit, s'étend vers l'extérieur dans la direction de la largeur du bandage pneumatique, une largeur de rainure étant accrue, et atteint l'extrémité de la bande de roulement (TE).

6. Bandage pneumatique pour poids-lourds (1) selon l'une quelconque des revendications 1 à 5, dans lequel une valeur maximale d'un angle formé par la rainure dans le sens de la largeur (16) et la direction de la largeur du bandage pneumatique, est compris dans un intervalle allant de 20 à 80°.

FIG. 1

# FIG. 2

FIG. 3

# FIG. 4

18a(18b)

16i

d

FIG. 5

EP 3 466 723 B1

# FIG. 6

FIG. 7

# FIG. 8

FIG. 9

EP 3 466 723 B1

## REFERENCES CITED IN THE DESCRIPTION

### Patent documents cited in the description

- JP 2013220719 A
- JP 2012183885 A
- JP 63222907 A
- JP 7117414 A
- JP 2013220713 A
- EP 3321105 A1
- WO 2013157544 A

### Non-patent literature cited in the description

- JATMA YEAR BOOK. Japan Automobile Tyre Manufacturers Association
- YEAR BOOK. THE TIRE AND RIM ASSOCIATION INC
- The European Tyre and Rim Technical Organisation. STANDARD MANUAL